(19) Europäisches Patentamt
European Patent Office
Office européen des brevets

(11) **EP 4 468 019 A1**

(12) **EUROPEAN PATENT APPLICATION**

(43) Date of publication:
**27.11.2024 Bulletin 2024/48**

(21) Application number: **23305835.3**

(22) Date of filing: **25.05.2023**

(51) International Patent Classification (IPC):
**G01S 5/06** *(2006.01)*    **G01S 5/10** *(2006.01)*

(52) Cooperative Patent Classification (CPC):
**G01S 5/06;** G01S 5/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Firecell**
**06300 Nice (FR)**

(72) Inventors:
• **AHADI, Mohsen**
  **06600 ANTIBES (FR)**
• **THIENOT, Cédric**
  **75010 PARIS (FR)**
• **KALTENBERGER, Florian**
  **06560 VALBONNE (FR)**

(74) Representative: **Atout PI Laplace**
**Immeuble Up On**
**25 Boulevard Romain Rolland**
**CS 40072**
**75685 Paris Cedex 14 (FR)**

(54) **COMMUNICATION DEVICE POSITIONING ESTIMATION METHOD AND SYSTEM IN A WIRELESS TELECOMMUNICATION SYSTEM**

(57)     A positioning estimation method in a wireless telecommunication system (1) comprising a plurality of communication devices (10) connected through wireless telecommunication links (2), reference signals (SRS) being transmitted between a UE (10) whose position is to be estimated and each one of at N gNBs (20) whose positions are known, wherein N ≥3, comprising:
- obtaining T time values, where these T time values are N Times of Arrival or N-1 Time Differences of Arrival;
- transposing the T obtained time values into T distance values and using the known positions of the gNBs, determining a set of T non linear equations;
- estimating the UE position coordinates by solving the set of nonlinear equations through a Particle Swarm Optimization method wherein at each iteration of said Particle Swarm Optimization method, a plurality of candidate UE positions corresponding to the swarm particles are updated based upon the position and velocities of the swarm particles.

FIG.1

**Description**

**Technical Field** :

The invention lies in the field of the positioning estimation of a communication device in a wireless communication network.

**Background art :**

In many emerging industrial use cases, including intelligent logistics, autonomous robotics, the internet of things (IoT), and others, estimating with accuracy the location of a telecommunication device, usually a mobile user terminal, is crucial. The majority of these instances involve indoor environments where the Global Navigation Satellite System (GNSS) assisted localization and other conventional solutions are insufficiently accurate due to a lack of direct Line of Sight (LOS) between the GPS satellite and at least a part of the wireless communication system. With the introduction of the 5G New Radio (5GNR) cellular system, reliable, wide-band, and low-latency positioning reference signals dedicated to localization are now available, enabling an improved positioning precision.

LOS (Line-of-Sight): LOS refers to a propagation condition where there is a clear and unobstructed path between the transmitter and the receiver. In other words, there are no significant obstacles or physical obstructions between the communicating entities. However, In indoor LOS conditions, the signal travels directly from the transmitter to the receiver among significant reflections or diffractions.

NLOS (Non-Line-of-Sight): NLOS in indoor conditions, refers to a propagation condition where there are obstacles or obstructions between the transmitter and the receiver, blocking the direct line-of-sight path as well as reflections, diffractions, scattering, or other forms of propagation effects due to the presence of clutters or scatterers. These obstacles can cause signal degradation, multipath fading, and reduced signal strength at the receiver.

However an asynchronous user terminal timing reference happens to be a usual cause of positioning error. Another cause of the error is due to approximations to solve a system of non-linear equations determined from Time of Arrivals of the reference signals.

There is thus a need of a solution for estimating a mobile user terminal position with a better accuracy.

**Summary of the invention** :

To this end, according to a first aspect, the present invention describes a communication device positioning estimation method in a wireless telecommunication system comprising a plurality of communication devices connected through wireless telecommunication links, said method comprising the following steps implemented by at least an electronic system connected to said wireless telecommunication system:

- predefined reference signals being transmitted at a given time on said telecommunication links between a communication device whose position is to be estimated, called hereafter UE, and each one of at N communication devices whose positions are known and called hereafter gNBs, wherein $N \geq 3$, obtaining T time values, where these T time values are :

    ◦ N Times of Arrival, each being the Time of Arrival of predefined reference signal transmitted between the UE and a respective one of the N other gNBs; or

    ◦ N-1 Time Differences of Arrival calculated by subtracting the Time of Arrival of predefined reference signal transmitted between the UE and a chosen one of the N gNBs to the Time of Arrival of predefined reference signal transmitted between the UE and each one of the N-1 other gNBs;

- transposing the T obtained time values into T distance values and using the known positions of the gNBs, determining a set of T non linear equations, the unknown values of this set of equations comprising the UE position coordinates to be estimated;

- estimating the UE position coordinates by solving the set of nonlinear equations through implementation of a Particle Swarm Optimization method wherein at each iteration of said Particle Swarm Optimization method, a plurality of candidate UE positions corresponding to the swarm particles are updated based upon the position and velocities of the swarm particles.

In embodiments, such a method will also comprise at least one of the following characteristics:

- further to the transmission of a said predefined reference signal between anyone of the N gNB and the UE, only the first peak in the received predefined reference signal impulse response in the time domain is considered to obtain the time values ;

- the number of swarm particles is greater than 200 ;

- N = 3 or 4 and the UE is in the LOS with the gNBs ;

- said device positioning estimation method is used as User Equipment positioning implemented in a 5G wireless communication network using UL nrSRS or DL-nrPRS with 80-100MHz bandwidth.

According to another aspect, the invention describes a computer program adapted to be stored in the memory of a communication device positioning estimation system further comprising a microcomputer, said computer program including instructions which, when executed on the microcomputer, implement the steps of a method according to the first aspect of the invention.

The invention also discloses a non-transitory computer-readable medium, storing a computer program product comprising code instructions for executing a method of the invention.

According to another aspect, the invention describes a communication device positioning estimation system adapted for positioning estimation, in a wireless telecommunication system comprising a plurality of communication devices connected through wireless telecommunication links;

predefined reference signals being transmitted at a given time on said telecommunication links between a communication device whose position is to be estimated, called hereafter UE, and each one of at N communication devices whose positions are known and called hereafter gNBs, wherein N ≥3, said communication device positioning estimation system is adapted for obtaining T time values, where these T time values are :

N Times of Arrival, each being the Time of Arrival of predefined reference signal transmitted between the UE and a respective one of the N other gNBs; or

N-1 Time Differences of Arrival calculated by subtracting the Time of Arrival of predefined reference signal transmitted between the UE and a chosen one of the N gNBs to the Time of Arrival of predefined reference signal transmitted between the UE and each one of the N-1 other gNBs;

said communication device positioning estimation system being further adapted for transposing the T obtained time values into T distance values and using the known positions of the gNBs, for determining a set of T non linear equations, the unknown values of this set of equations comprising the UE position coordinates to be estimated;

the communication device positioning estimation system being then adapted for estimating the UE position coordinates by solving the set of nonlinear equations through implementation of a Particle Swarm Optimization method wherein at each iteration of said Particle Swarm Optimization method, a plurality of candidate UE positions corresponding to the swarm particles are updated based upon the position and velocities of the swarm particles.

In embodiments, such a system will also comprise at least one of the following characteristics:

- it is adapted for obtaining the time values by using only the first peak in the predefined reference signal impulse response in the time domain received further to the transmission of a said predefined reference signal between anyone of the N gNB and the UE;

- the number of swarm particles is greater than 200;

- N = 3 or 4 and the UE (10) is in the LOS with the gNBs (20).

**Brief description of the drawings:**

The invention will be better understood and other characteristics, details and advantages will appear better on reading the following description, given without limitation, and thanks to the appended figures, given by way of example.

[Fig. 1] Figure 1 is an illustration of a wireless telecommunication system according to an embodiment of the invention;

[Fig. 2] Figure 2 represents steps of position estimation method in a wireless telecommunication system according to an embodiment of the invention;

[Fig. 3] Figure 3 shows graphs of positioning errors obtained using different methods and using 3 or 4 gNB.

**Detailed description:**

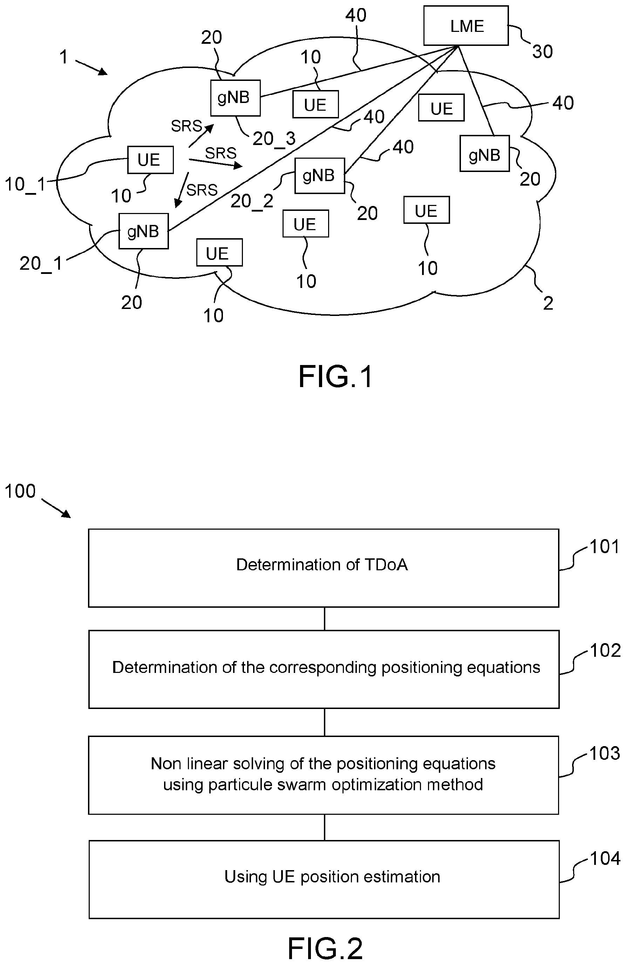

Figure 1 represents a wireless communication system 1 implementing an embodiment of the invention.

The wireless communication system 1 includes a plurality of wireless communication devices. Each communication device includes a wireless (for example Radio Frequency) emission and reception block adapted to exchange data upon wireless links (symbolically referenced 2), a processor and a memory. The memory stores software instructions that when executed upon the processor, enables the wireless communication device to implement a predefined communication protocol.

Some of the wireless communication devices are wireless communication devices 20 having known positions (and they are for example immobile), and some of the wireless communication devices are wireless communication devices 10 having unknown positions and being for example mobile.

For example the wireless communication system 1 is 5G New Radio (5GNR) cellular system, the wireless communication devices 10 are user mobile equipment (UE) and the wireless communication devices 20 are gNBs 20.

The wireless communication system 1 includes also a Location Management electronic Equipment 30 (LME 30), including at least a telecommunication block, a processor and a memory storing the coordinates of the gNB 20 in a referential R. There are communication links 40 between the LME 30 and each gNB 20. These communication links are for example wired or wireless.

In embodiments the LME 30 is dedicated equipment or is located inside one or several gNBs or distributed into several equipments.

**Basics of ToA and TDoA approaches:**

**Time of Arrival (ToA)** approach is a known ranging technique, used in the wireless telecommunication domain, and based on knowing the exact time that a signal was sent from the source communication device ($t_{sent}$), the exact time the signal arrives at a destination communication device ($t_{arrival}$), and the speed, $c$, at which the signal travels (usually the speed of light). One ("the reference point") of the source and destination communication devices has a known position and the other one ("the target point") has an unknown position that has to be determined. Once $t_{sent}$, $t_{arrival}$ and $c$ are known, the distance $d$ between the source and destination communication devices can be calculated using the simple following equation:

$$d = c * (t_{arrival} - t_{sent})$$

In two dimensions, this yields a circle with the following equation:

$$d = \sqrt{\left(x_{ref} - x\right)^2 + \left(y_{ref} - y\right)^2}$$

where ($x_{ref}$, $y_{ref}$) is the -known- position of the reference point, and ($x$, $y$) is the position of the target point.

Once this set is calculated for enough reference points (at least three for two dimensional or at least four for three-dimensional), the exact position of the target is at the intersection of the circles and corresponds to the solution of the set of equations.

**Time Difference of Arrival (TDoA)** approach is also a ranging technique. TDoA does not require the time that the signal was sent from the source communication device, only the time the signal was received and the speed that the signal travels. Once the signal is received at two reference points, the difference in arrival time can be used to calculate the difference in distances between the target point and each of the two reference points. This difference can be calculated using:

$$\Delta d = c * (\Delta t)$$

where c is the speed of light, $\Delta d$ is the difference between the distance between the target point and the first reference point and the distance between the target point and the second reference point reference point and $\Delta t$ is the difference in signal arrival times at each reference point. In two dimensions, this leads to the following equation:

$$\Delta d = \sqrt{(x_2 - x)^2 - (y_2 - y)^2} - \sqrt{(x_1 - x)^2 - (y_1 - y)^2}$$

where $(x_1, y_1)$ and $(x_2, y_2)$ are the -known positions- of the reference points. Using nonlinear regression, this equation can be converted to the form of a hyperbola. Once enough hyperbolas have been calculated, the position of the target can be calculated by finding the intersection.

From a geometric perspective regarding TDoA approach: the values of (x, y) that solve the positioning equations form a hyperbola when plotted. Because each measurement of time difference defines a hyperbola. In the absence of noise, the intersection of these hyperbolae determines the position of the target point. For instance, if a hyperbola is drawn between two reference points, there will be an infinite number of possible positions for the target point location depending on the observed time difference, including the true location. Adding a third reference point, on the other hand, defines two more hyperbolae, one of which is redundant. There is now two hyperbolae that intersect at a single location. However, it is not always the case (cf. "TOA and DOA Based Positioning", John Wiley & Sons, Ltd, 2018, ch. Two, pp. 197-198). Due to the nonlinear nature of the equations, three reference points can sometimes create two hyperbolas with two intersection points, one of which is the real solution. As a result, in some cases, the TDoA approach needs the insertion of a fourth reference point to ensure a unique solution.

Referring now to Figure 2, a UE position estimation method 100 in a wireless telecommunication system, for example, the wireless telecommunication system 1 of Figure 1, is now described according to an embodiment of the invention.

Because of using TdoA method, network-wide synchronization in not required, it means UE and gNBs do not have to be synched, however, the gNBs are assumed to be tightly synched which is normal.

Considering a given UE 10 which position thereof has to be determined, for example UE 10_1: the UE 10_1 transmits a predefined reference signal, called SRS (Sounding Reference Signal) through its Emission/reception block upon wireless connections (the resources corresponding to these wireless connections are for example allocated to the UE 10_1 by a serving UE gNB 20 as a function of the last position estimated for the UE 10_1). N surrounding gNBs 20 at wireless range, here for example N=3 and at least each of gNB 20_1, 20_2 and 20_3, receives, and identifies, the SRS, the associated Time of Arrival (ToA) of the SRS at said gNB, and the source UE 10_1.

The Time of Arrivals (ToA) of the UE SRS are transmitted from each gNB 20_1, 220_2, 20_3 to the LME 30 via communication links 40 between the gNBs 20 and the LME 30.

In a step 101, the LME 30 receives from at least each of the N gNB the ToA corresponding to the last SRS sent by the UE 10_1. Upon reception of these ToA, to avoid UE clock synchronization issues, ToAs are then transformed by the LME 30 into TDoAs, for example by substracting ToA of gNB 20_1 to the other ToA. N-1 TDoAs are thus extracted from N gNBs.

In a step 102, TDoAs issued from step 101 are transformed, by the LME block 30, into relative distances (by multiplying the TDoA by c), which, together with the known locations of the N gNBs, form a nonlinear system of equations in which the distance differences are observations and the (x,y) coordinates of the UE 10_1 in a given referential R are unknown : a system of positioning equations is thus determined based upon the TDoAs (see section "Basics of ToA and TDoA approaches" hereabove).

This non linear system of equations is:

$$\mathbf{f}(x, y, z) + \mathbf{e} = \mathbf{r}$$

and, for N gNBs, contains (N - 1) TDoA equations, with:

$$f(x,y) = \begin{bmatrix} f_{TDoA,1}(x,y) \\ \vdots \\ f_{TDoA,N-1}(x,y) \end{bmatrix}$$

and, for n = 1 to N-1 :

$$f_{TDoA,n}(x,y) = d_n - d_1 = \sqrt{(x-x_n)^2 + (y-y_n)^2} - \sqrt{(x-x_1)^2 + (y-y_1)^2}$$

$d_n$ is the distance between the considered UE and the $n^{th}$ gNB and $(x_n, y_n)$ are the coordinates of the $n^{th}$ gNB in the referential R;
e is the range measurement error which is caused by noise;
*r* is the range measurement taken from TDOAs which is assumed to have an Additive White Gaussian Noise (AWGN) error ; $r_n = d_n - d_1$, $r_n$ being the $n^{th}$ component of the column matrix *r*, n = 1 to N-1.

There are two general estimation approaches to solve this problem: linear and non-linear. A basic linear technique, such as Linear Least Squares (LLS), provides an imprecise estimate of the variable with a significant reliance on the number of observations or known anchors (gNBs). It can be enhanced by including timing error information in the Weighted Linear Least Squares algorithm (WLLS). However, in many practical situations, the error variance is unavailable.

Non-linear approaches, on the other hand, address this issue directly by solving nonlinear equations. The Non-Linear Least Squares (NLS) approach is used to minimize the Mean Squared. If noise statistics are given, this technique is equivalent to the Maximum Likelihood method (ML). These solutions employ Taylor's series linearization and, for example, the Gauss-Newton technique to compensate for approximation error. The Maximum Likelihood can match the Cramer Rao Lower Bound (CRLB), which is the performance benchmark for time or position estimators.

A solution could be to estimate a coarse position using LLS and then, from this initial coarse position, to iteratively converge to the minimal error using NLS or ML. However, the performance of these approaches is still dependent on an initial estimation, which is based on the number of gNBs.

Another solution, using PSO (Particle Swarm Optimization), is disclosed in the further step.

We assumed hereabove that the gNBs have fixed known positions(x,y,z), and the UE's 5G tag is also mounted on the UE with a fixed height in regard to the UE, z is always known in the equations (if we assume that a UE moves in Z axis, then TDOA is not enough to estimate the z, one needs Angle information in that case for example Uplink Angle of Arrival).

In a step 103, the positioning non linear equation system determined in previous step 102 is solved by LME 30 using PSO. PSO is a stochastic solution that uses a swarm of points in a limited interval to converge to the position with the least error.

PSO algorithm optimizes a problem by iteratively trying to improve a candidate position solution with regard to a given measure of quality (or cost function). It solves a problem by having a population of candidate solutions (particles of the Swarm), and moving these particles around in the search-space according to simple mathematical formula over the particle's position and velocity. Each particle's movement is influenced by its local best known position, but is also guided toward the best known positions in the search-space, which are updated as better positions are found by other particles. This is expected to move the swarm toward the best solutions.

Thus in current step 103, the PSO computational method is implemented by the LME block 30to solve the positioning equations, by :

- using a population of locations as initial points and

- iteratively converging to the minimal cost function value.

This strategy is independent of the number of gNBs utilized and does not rely on a single initial guess, avoiding a local minimum in error optimization.

The PSO algorithm updates the entire swarm at each iteration by moving the particles, updating the velocity and position of each particle in every dimension as a function of three components :

- its current velocity: $v_k^i$  ;
- its personal best: $p^i$

- the global best $p^g$

as defined below:

$$\mathbf{v}_{k+1}^i = w\mathbf{v}_k^i + c_1 r_1(\mathbf{p}_k^i - \mathbf{x}_k^i) + c_2 r_2(\mathbf{p}_k^g - \mathbf{x}_k^g),$$

and

$$\mathbf{x}_{k+1}^i = \mathbf{x}_k^i + \mathbf{v}_k^i.$$

where:

- i is the index of a considered particle, i.e. for a total number M of particles in the swarm, the integer i =1 to M;
- k is the rank of the considered iteration into the PSO algorithm, and $x_k^i$ and $v_k^i$ are respectively the position and velocity of the ith particle of the swarm, at the kth iteration of PSO algorithm in step 103;
- each particle of index i records the position in which it had the least error so far as the personal best position $p^i$; the swarm also records the position in which it has the minimum cost function value among all of the particles and iterations, as global best $p^g$; thus during each iteration k (for example at the end of each iteration), there is an individual value and a global best value determined which will be compared respectively to the personal and global best of the previous iteration k-1 to see if one and/or the other is to be replaced or not; for example the initialization values of individual and global best value are infinity;
- the constant c1 and c2 in the original PSO can adjust the searching rate between personal best ($p^i$) and global best ($p^g$). c2 needs to be greater than c1 in order for the swarm to converge; in an example, c1=0.5 and c2=0.9.
- w is another constant called inertia weight;
- r1, r2 are random numbers between 0 and 1.

Example of the cost function J that could be chosen:

$$J = r - f(x, y) =>$$

$$J = [r_1, r_2, ..., r_{N-1}] - [f_{TDoA,1}, ..., f_{TDoA,N-1}]$$

The number of points in the swarm depends on the dimensions of the problem. In an example, for an Indoor Factory Hall (InFH) standard channel model from 3gpp that covers a 120m * 60m * 10m, a population of around [250-500] particles shows proper results.

The global and individual weights (0.5 and 0.9) is found by experiment, as well as the number of iterations required to reach the global minimum for the cost function(10-20).

PSO can quickly converge to the correct position after a few iterations by having a few hundred swarm points (for example M is chosen between [200 ; 500] because the indoor positioning problem is likewise confined to a 2D or 3D bounded region.

For a simulated environment with 120*60=7200 squared meters, a number of 500 particles shows a good result in most of the points and corners of the 2D space. Smaller space can use less number of particles. Less points can be chosen but need compromise with more iterations in order to converge.

Also the error from the linear approximation of nonlinearities is solved as the method 100 tackles the problem directly by solving the nonlinear equations (i.e. without approximating through a linearization of the equations).

Details about general aspects about PSO can be founded for example in J. Kennedy et R. Eberhart, « Particle swarm optimization », IEEE International Conference on Neural Networks, 1995. Proceedings, vol. 4, november 1995, p. 1942-1948 vol.4.

Using PSO for UE position estimation enables to find a global minimum error that is independent of the number N of used gNBs (thus needs the least number of gNBs comparing to other methods that needs more gNBs to get a proper initial point) and does not require a single correct coarse initial point estimation nor statistics of the noise. The positioning method according to the invention provides an optimum UE location estimate utilizing just 5G pilot signals and does not need GNSS support for initializing the estimators. The method enables a sub-meter UE positioning.

In addition, in an embodiment, a determination of if a SRS signal received by a gNB has followed a path of Direct Line of Sight between the UE and the gNB is performed, and only ToAs calculated for SRS having followed a such path of Line of Sight (LoS signal) between the UE and the gNB are taken into account in the positioning estimation method steps 101-103, thus providing a better accuracy of UE position.

In an embodiment, the first peak in the received SRS signal impulse response from each of the N gNB in the time domain (thus estimated as having followed a Line of Sight path) is considered to determine the ToA times values , the subsequent received signal peaks corresponding to this given SRS are on the contrary estimated as not LOS path signals (but as a reflected signal), and thus are not being used to calculate ToAs.

So, given $N_{tot}$ the number of gNBs available to be used for the positioning method of the invention, only (at least) N =3 or 4 of these $N_{tot}$ gNBs -and the corresponding N ToAs- are for example used in the steps 101-103 in an embodiment of the invention, these N gNBs being gNBs for which the ToAs have been determined selectively based upon LOS signals.

Depending on the embodiments, the steps of the positioning method 100 are iterated for each active UE at least every period T, with T for example being the period of UL-SRS or DL-PRS transmission, suggested, in the standard, to be every 10-20 ms, and/or when specific events are detected (change of gNB serving the UE ...).

The UE position determined by the method 100 is then used for example by at least an electronic telecommunication equipment in the system 1, in order to perform, depending on the considered application: UE time and/or frequency communication resources allocation and/or beamforming and/or selection of UE serving base station, as a function of the last determined UE position.

The positioning solution thus enables to overcome the synchronization challenges, detect and mitigate non-LOS, and solve the system of equations to produce a global minimum error for the location estimation non-linear problem.

In the embodiment of the invention position method described hereabove, TdoAs have been calculated on uplinks (from UE to gNBs), here based on UL-SRS of 5GNR; the invention can in other embodiments be implemented calculating TDoAs on downlink (from gNBs to UE), for example in 5GNR based on DL-PRS reference signals.

TDoA approach has been considered in the description of the invention hereabove. In another embodiment, the set of equations is deduced from ToA approach instead of TDoA approach.

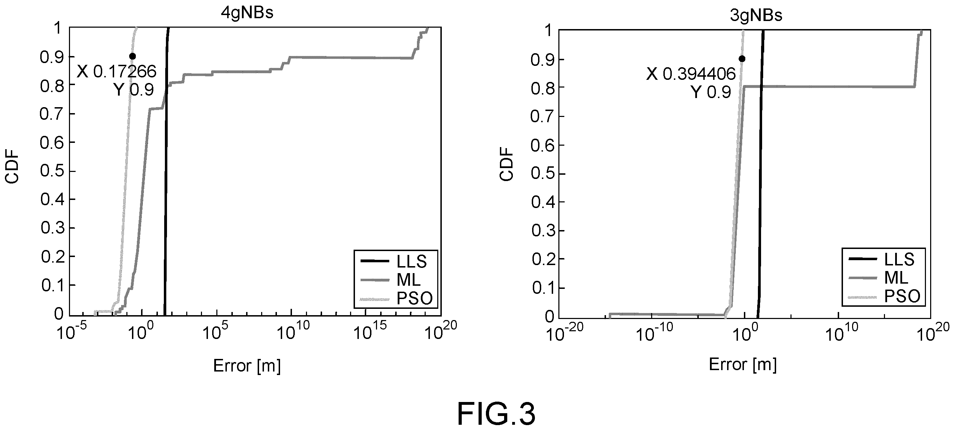

Figure 3 shows graphs of positioning errors (horizontal axis "error", the error value being expressed in meter) for Cumulative Distribution Functions (CDF) of Root Mean Squared Errors (RMSE) for distance estimation. The different graphs correspond to values obtained using different methods and using 3 gNB (graphs on the right) or 4 gNB (graphs on the left), for a signal bandwith of 100 MHz (bandwidth used for channel and time estimation by choosing for UL-SRS or DL-PRS, 272 PRB (Physical Resource Blocks) and SCS (SubCarrier Spacing) =30 khz) and a value of oversampling equal to 8.

The compared methods fort position estimation are :

- LLS (Linear Least Squares) method;

- ML (Maximum Likehood) method;

- EKF (Extended Kalman Filter) is also another famous conventional method which suffers from the similar requirements for the initial point and error statistics;

- a method according to the invention, using PSO.

Regarding the point "X, Y=0.9" in FIG 3: simulating the algorithm in the 3gpp InFH channel model, 100 or more random UE positions were generated, then using the known gNB coordinates and the PSO algorithm, the position for 100 UEs was estimated. By plotting the Cumulative Distribution Function (CDF) for this 100 random variables, it is shown that in 90% of cases PSO has a submeter positioning error.

PSO has better performance with the least number of gNBs (3 or 4) while similar results from NLS (ML) require time estimations from more LOS gNBs.

Moreover the analysis of CDF of RMSE for distance estimation demonstrate that employing a higher signal BW between 80-100 MHz compared to 40 MHz or smaller leads to a considerable improvement.

The invention has been described above in an embodiment considering a 5GNR cellular system, but of course it can be implemented to various other wireless technology networks, such as LTE, 3G, 4G ..., IoT, and more generally in any wireless telecommunication system comprising wireless communication devices at known positions (that can behave as the gNBs in the hereabove described method) and wireless communication devices (that can each behave as the UE in the hereabove described method), using PSO on the UL or DL of any communication system that is able to measure the range between an anchor (gNB) and an unknown coordinate device (UE) over time, power, angle, frequency estimation.

The method steps hereabove described as performed by the LME 30 can be implemented by executing software instructions on a processor of the LME. Alternatively, it can be implemented by dedicated hardware, typically a digital integrated circuit, either specific (ASIC) or based on programmable logic (e.g. FPGA/Field Programmable Gate Array).

## Claims

1. Communication device positioning estimation method in a wireless telecommunication system (1) comprising a plurality of communication devices (10) connected through wireless telecommunication links (2), said method comprising the following steps implemented by at least an electronic system (LME 30) connected to said wireless telecommunication system (1):

   - predefined reference signals (SRS) being transmitted at a given time on said telecommunication links (2) between a communication device (10) whose position is to be estimated, called hereafter UE, and each one of at N communication devices (20) whose positions are known and called hereafter gNBs, wherein $N \geq 3$, obtaining T time values, where these T time values are :

     ◦ N Times of Arrival, each being the Time of Arrival of predefined reference signal transmitted between the UE (10) and a respective one of the N other gNBs (20); or
     ◦ N-1 Time Differences of Arrival calculated by subtracting the Time of Arrival of predefined reference signal transmitted between the UE (10) and a chosen one of the N gNBs (20) to the Time of Arrival of predefined reference signal transmitted between the UE and each one of the N-1 other gNBs;

   - transposing the T obtained time values into T distance values and using the known positions of the gNBs, determining a set of T non linear equations, the unknown values of this set of equations comprising the UE position coordinates to be estimated;
   - estimating the UE position coordinates by solving the set of nonlinear equations through implementation of a Particle Swarm Optimization method wherein at each iteration of said Particle Swarm Optimization method, a plurality of candidate UE positions corresponding to the swarm particles are updated based upon the position and velocities of the swarm particles.

2. Communication device positioning estimation method according to claim 1, wherein further to the transmission of a said predefined reference signal between anyone of the N gNB and the UE, only the first peak in the received predefined reference signal impulse response in the time domain is considered to obtain the time values.

3. Communication device positioning estimation method according to claim 1 or 2, wherein the number of swarm particles is greater than 200.

4. Communication device positioning estimation method according to anyone of the previous claims, wherein N = 3 or 4 and the UE (10) is in the Line-Of-Sight with the gNBs (20).

5. Communication device positioning estimation method according to anyone of the previous claims as User Equipment positioning implemented in a 5G wireless communication network using UL nrSRS or DL-nrPRS with 80-100MHz bandwidth.

6. Computer program, adapted to be stored in the memory of a communication device positioning estimation system (30) further comprising a microcomputer, said computer program including instructions which, when executed on the microcomputer, implement the steps of a method according to anyone of the preceding claims.

7. Communication device positioning estimation system (30) adapted for positioning estimation, in a wireless telecommunication system (1) comprising a plurality of communication devices (10) connected through wireless telecommunication links (2);
   predefined reference signals (SRS) being transmitted at a given time on said telecommunication links (2) between a communication device (10) whose position is to be estimated, called hereafter UE, and each one of at N commu-

EP 4 468 019 A1

nication devices (20) whose positions are known and called hereafter gNBs, wherein N ≥3, said communication device positioning estimation system is adapted for obtaining T time values, where these T time values are :

N Times of Arrival, each being the Time of Arrival of predefined reference signal transmitted between the UE (10) and a respective one of the N other gNBs (20); or
N-1 Time Differences of Arrival calculated by subtracting the Time of Arrival of predefined reference signal transmitted between the UE (10) and a chosen one of the N gNBs (20) to the Time of Arrival of predefined reference signal transmitted between the UE and each one of the N-1 other gNBs;
said communication device positioning estimation system being further adapted for transposing the T obtained time values into T distance values and using the known positions of the gNBs, for determining a set of T non linear equations, the unknown values of this set of equations comprising the UE position coordinates to be estimated;
the communication device positioning estimation system being then adapted for estimating the UE position coordinates by solving the set of nonlinear equations through implementation of a Particle Swarm Optimization method wherein at each iteration of said Particle Swarm Optimization method, a plurality of candidate UE positions corresponding to the swarm particles are updated based upon the position and velocities of the swarm particles.

8. Communication device positioning estimation system (30) according to claim 7, adapted for obtaining the time values by using only the first peak in the predefined reference signal impulse response in the time domain received further to the transmission of a said predefined reference signal between anyone of the N gNB and the UE.

9. Communication device positioning estimation system (30) according to claim 7 or 8, wherein the number of swarm particles is greater than 200.

10. Communication device positioning estimation system (30) according to anyone of claims 7 to 9, wherein N = 3 or 4 and the UE (10) is in the Line-Of-Sight with the gNBs (20).

FIG.1

FIG.2

FIG.3

EP 4 468 019 A1

**EP 4 468 019 A1**

| | Europäisches Patentamt European Patent Office Office européen des brevets | **EUROPEAN SEARCH REPORT** | Application Number EP 23 30 5835 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI ET AL: "Uplink based solutions for NR positioning", 3GPP DRAFT; R1-1900037, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Taipei; 20190121 – 20190125 20 January 2019 (2019-01-20), XP051592963, Retrieved from the Internet: URL:http://www.3gpp.org/ftp/Meetings%5F3GP P%5FSYNC/RAN1/Docs/R1%2D1900037%2Ezip [retrieved on 2019-01-20] | 1,2,4, 6-8,10 | INV. G01S5/06 ADD. G01S5/10 |
| Y | * 2 UTDOA; page 1 – page 2 * * Reference; page 6 * | 3,5,9 | |
| X | WANG YI: "User positioning with particle swarm optimization", 2017 INTERNATIONAL CONFERENCE ON INDOOR POSITIONING AND INDOOR NAVIGATION (IPIN), IEEE, 18 September 2017 (2017-09-18), pages 1-5, XP033261527, DOI: 10.1109/IPIN.2017.8115935 [retrieved on 2017-11-20] | 1,2,4, 6-8,10 | **TECHNICAL FIELDS SEARCHED (IPC)** G01S |
| Y | * the whole document * | 3,5,9 | |

-/--

The present search report has been drawn up for all claims

| Place of search | Date of completion of the search | Examiner |
|---|---|---|
| Munich | 31 October 2023 | Krummenacker, Benoit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 4

13

Europäisches
Patentamt
European
Patent Office
Office européen
des brevets

**EUROPEAN SEARCH REPORT**

Application Number

EP 23 30 5835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG YI ET AL: "Jointly positioning multiple users in aid of user-to-user distances", 2017 IEEE 28TH ANNUAL INTERNATIONAL SYMPOSIUM ON PERSONAL, INDOOR, AND MOBILE RADIO COMMUNICATIONS (PIMRC), IEEE, 8 October 2017 (2017-10-08), pages 1-5, XP033321631, DOI: 10.1109/PIMRC.2017.8292736 ISBN: 978-1-5386-3529-2 [retrieved on 2018-02-14] | 1,2,4, 6-8,10 | |
| Y | * figure 1 * <br> * I. Introduction; page 1 * <br> * II.A. Single User Positioning; page 2 * <br> * III. The PSO For Positioning – V. Conclusions; page 3 – page 5 * <br> ----- <br> -/-- | 3,5,9 | |

TECHNICAL FIELDS
SEARCHED    (IPC)

The present search report has been drawn up for all claims

| Place of search | Date of completion of the search | Examiner |
|---|---|---|
| Munich | 31 October 2023 | Krummenacker, Benoit |

EPO FORM 1503 03.82 (P04C01)

page 2 of 4

# EUROPEAN SEARCH REPORT

Europäisches Patentamt
European Patent Office
Office européen des brevets

**Application Number**

EP 23 30 5835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PIOTROWSKI ADAM P. ET AL: "Population size in Particle Swarm Optimization", SWARM AND EVOLUTIONARY COMPUTATION, 1 November 2020 (2020-11-01), pages 1-18, XP093096786, ISSN: 2210-6502, DOI: 10.1016/j.swevo.2020.100718 Retrieved from the Internet: URL:https://www.sciencedirect.com/science/article/pii/S2210650220303710/pdfft?md5=b79aa8a339af61134c09d633eaae626e&pid=1-s2.0-S2210650220303710-main.pdf [retrieved on 2023-10-31] * tables 1 @ PSO-iw * * 1. Introduction; page 1 - page 3 * * 5. Results and discussion; page 10; column 2; second paragraph * * 5. Results and discussion; page 14; column 2; penultimate paragraph * * 6. Conclusions; page 17; column 1; lines 6-8 * ----- -/-- | 3,9 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 31 October 2023 | Krummenacker, Benoit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MODERATOR (AT&T): "Summary of UE features for NR positioning enhancements", 3GPP DRAFT; R1-2202853, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20220221 – 20220303 4 March 2022 (2022-03-04), XP052122336, Retrieved from the Internet: URL:https://ftp.3gpp.org/tsg_ran/WG1_RL1/TSGR1_108-e/Docs/R1-2202853.zip R1-2202853 – ePos UE Features_v034_FINAL.docx [retrieved on 2022-03-04] * forth row of the 6-row table; page 54 * ----- | 5 | |
| | | | **TECHNICAL FIELDS SEARCHED (IPC)** |

The present search report has been drawn up for all claims

| Place of search | Date of completion of the search | Examiner |
|---|---|---|
| Munich | 31 October 2023 | Krummenacker, Benoit |

EPO FORM 1503 03.82 (P04C01)

# EP 4 468 019 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- TOA and DOA Based Positioning. John Wiley & Sons, Ltd, 2018, 197-198

- **J. KENNEDY ; R. EBERHART.** Particle swarm optimization. *IEEE International Conference on Neural Networks, 1995. Proceedings,* November 1995, vol. 4, 1942-1948